# EUROPÄISCHE PATENTSCHRIFT

(11) **EP 1 227 260 B1**
(45) Veröffentlichungstag und Bekanntmachung des Hinweises auf die Patenterteilung: **02.05.2007**
(21) Anmeldenummer: 02000255.6
(22) Anmeldetag: 15.01.2002
(51) Int. Cl.: F16D 65/097, F16D 55/224

(54) **Schwimmsattelscheibenbremse mit einer Federanordnung**
Floating caliper disc brake with spring assembly
Frein à disque à étrier coulissant avec ensemble de ressort

(30) Priorität: 24.01.2001 DE 10103058; 03.12.2001 DE 10159328
(43) Veröffentlichungstag der Anmeldung: 31.07.2002
(73) Patentinhaber: Continental Teves AG & Co. oHG, 60488 Frankfurt (DE)
(72) Erfinder: Bach, Uwe, 65527 Niedernhausen (DE); Weiler, Rolf, 65817 Eppstein (DE); Mehner, Götz, 64285 Darmstadt (DE); Wild, Norbert, 61267 Neu Anspach (DE); Adelung, Matthias, 61440 Oberursel (DE); Roth, Gerald, 60386 Frankfurt/M. (DE); Kirschner, Thomas, 60596 Frankfurt am Main (DE)

(56) Entgegenhaltungen:
- DE-A- 4 106 957
- DE-A- 19 626 299
- DE-A- 19 626 302

## Beschreibung

Die Erfindung bezieht sich auf eine Schwimmsattelscheibenbremse nach den Merkmalen des Oberbegriffs des Anspruchs 1 mit einer Federanordnung einerseits zur radial elastischen Verspannung eines Bremssattels an einem fahrzeugfest montierten Bremshalter sowie andererseits zur axialen Fixierung eines äußeren Bremsbelages am Bremssattel.

Aus der DE 196 26 299 A1 ist eine Federanordnung für eine gattungsgemäße Schwimmsattelscheibenbremse bekannt, mit einem Faustrahmensattel, der an einem fahrzeugfest montierten Bremshalter in Bremsbetätigungs- bzw. Axialrichtung verschiebbar gelagert ist. Der Bremshalter weist axial sich erstreckenden Tragarme auf, an denen beiderseits einer Bremsscheibe angeordnete Bremsbeläge axial verschiebbar abgestützt sind. Die Federanordnung umfasst eine einstückig aus Draht gebogene Haltefeder, die einen lösbar mit dem axial äußeren Bremsbelag verbundenen mittleren Abschnitt und zwei im wesentlichen in entgegengesetzte tangentiale Richtungen vom mittleren Abschnitt abstehende Federarme aufweist. Damit soll sowohl der Faustrahmensattel radial gegen den Bremshalter als auch der axial äußere Bremsbelag axial gegen den Faustrahmensattel verspannt werden. Zur Realisierung dieser Kombinationsfunktion ist es erforderlich die Draht-Haltefeder in mehreren Bearbeitungsschritten aufwendig zu biegen. Die Vielzahl der Biegungen schwächt die Haltefeder hinsichtlich ihrer Belastbarkeit. Darüber hinaus ist die Draht-Haltefeder ohnehin in ihren Einsatzmöglichkeiten beschränkt, da durch eine derartige Feder nur begrenzte Federkräfte aufgebracht werden können. So erweist sich die beschriebene Federanordnung beispielsweise bei schweren Bremssattelausführungen als unzureichend.

Die DE 196 26 302 A1 betrifft eine Federanordnung für eine Schwimmsattel-Scheibenbremse, die sowohl den Schwimmsattel radial gegenüber dem festen Bremsträger verspannt als auch gleichzeitig den axial äußeren Bremsbelag axial an den äußeren Gehäuseschenkel des Schwimmsattels andrückt. Dabei ist die Gehäusefeder auf montagefreundliche Weise lösbar an der Rückenplatte des äußeren Bremsbelages eingehakt und im Einbauzustand durch Rastnasen und Vorsprünge am Schwimmsattel verliersicher an die Schwimmsattel-Scheibenbremse angebunden. Auch diese Federanordnung erweist sich als nachteilig, da hohe Federkräfte nicht aufgebracht werden können, und da aufgrund der geometrischen Konzeption eine Vielzahl von Biegevorgängen notwendig ist.

Ausgehend davon ist es Aufgabe der Erfindung, eine für eine Schwimmsattelscheibenbremse mit einem insbesondere schweren Bremssattel geeignete Federanordnung zu schaffen, die ausreichende Federkräfte aufbringen kann und zudem bezüglich ihrer Einzelteile einfach zu fertigen ist.

Gelöst wird die Aufgabe durch eine Schwimmsattelscheibenbremse nach den Merkmalen des Patentanspruches 1. Danach umfasst die Schwimmsattelscheibenbremse einen verschiebbar an einem fahrzeugfest montierten Bremshalter gelagerten rahmenartigen Bremssattel, wobei der Bremssattel einen inneren Bremssattelschenkel, einen äußeren Bremssattelschenkel und einen Brückenabschnitt umfasst, und damit eine Bremsscheibe sowie beiderseits der Bremsscheibe angeordnete Bremsbeläge übergreift. Gleichzeitig umschließt bzw. umgreift der rahmenartige Bremssattel den Bremshalter sowie die Bremsbeläge in Umfangsrichtung der Bremsscheibe. Dabei sind die Bremsbeläge am Bremshalter verschiebbar geführt und abgestützt, wobei an einem äußeren Bremsbelag ein Halteelement befestigt ist. An der Schwimmsattelscheibenbremse ist eine mehrteilige Federanordnung angebracht, die sowohl den Bremssattel radial gegen den Bremshalter als auch einen axial äußeren Bremsbelag axial gegen den rahmenartigen Bremssattel verspannt. Die Federanordnung umfasst ein Federelement, das sich mit seitlichen Federarmen jeweils am Bremshalter radial abstützt sowie andererseits mit wenigstens einem Abschnitt radial am Bremssattel abgestützt ist. Zur Halterung des äußeren Bremsbelages weist das Halteelement mindestens einen Haltearm auf, welcher eine Ausnehmung des Bremssattelschenkels im wesentlichen durchragt und an einem dem Bremsbelag abgewandten Endabschnitt eine Öffnung aufweist. In diese greift das Federelement mit einer Federlasche ein, wodurch das Federelement axial mit dem Bremsbelag unter Vorspannung verbunden ist. Dabei ist es grundsätzlich möglich das Federelement sowohl ein- als auch mehrteilig auszuführen. Die Federanordnung umfasst damit einfach herzustellende Einzelteile, die zudem leicht zu montieren sind. Durch den Einsatz der erfindungsgemäßen Federanordnung wird ein unerwünschtes Klappern der Schwimmsattelscheibenbremse vermieden.

Eine weitere Ausgestaltung der Erfindung beinhaltet, dass das Halteelement mindestens zwei Klemmarme aufweist, welche in die Ausnehmung des äußeren Gehäuseschenkels eingreifen, und zur Ausbildung einer Klemmverbindung mit dem Bremssattel dienen. Auf diese Weise werden die Federanordnung und der Bremsbelag am äußeren Gehäuseschenkel festgelegt, insbesondere in radialer Richtung.

Gemäß einer vorteilhaften Weiterentwicklung ist das Federelement unmittelbar mit der Federlasche radial am Bremssattel abgestützt. Dadurch werden die über die beiden Federarme eingeleiteten Vorspannkräfte direkt mittels der Federlasche auf den Bremssattel übertragen. Bremssattel und Bremshalter sind somit radial klapperfrei miteinander verspannt.

Eine vorteilhafte Ausführung der Schwimmsattelscheibenbremse wird dadurch erreicht, dass die Federlasche zur axialen Verriegelung des Federelementes am Bremssattel in eine entsprechende Vertiefung des Bremssattels eingreift. Analog kann auch ein anderer Abschnitt des Federelementes in die Vertiefung am Bremssattel eingreifen, um das Federelement verliersicher am Bremssattel zu fixieren. Eine andere Möglichkeit der axialen Verriegelung des Federelementes am Bremssattel besteht darin, dass das Federelement zumindest einen Klammerabschnitt aufweist, der einen Abschnitt des Bremssattels axial hintergreift.

Weiterhin ist es sinnvoll die Schwimmsattelscheibenbremse mit Federanordnung derart zu gestalten, dass das Federelement einen großflächigen Mittelabschnitt umfasst, der eine zugehörige Ausnehmung im rahmenartigen Bremssattel im wesentlichen vollständig abdeckt. Solche Ausnehmungen im Bremssattel sind nicht selten erforderlich, beispielsweise um eine mechanische Bearbeitung des Bremssattels zu erlauben oder um die Kühlluftzuführung zu verbessern. Die Abdeckung einer derartigen Ausnehmung verhindert das unerwünschte Eindringen von Schmutz in die Ausnehmung oder sogar den Zwischenraum zwischen Bremsbelag und Bremsscheibe.

Eine besonders bevorzugte Variante der Schwimmsattelscheibenbremse mit Federanordnung ergibt sich dadurch, dass das mehrteilige Federelement einen als Abdeckung ausgebildeten Mittelabschnitt und einen Federbügel mit Federarmen aufweist, wobei Abdeckung und Federbügel miteinander verbunden sind. Die Abdeckung und der Federbügel sind zunächst separat voneinander zu fertigende Einzelbauteile, die dadurch besonders flexibel gestaltet und deren unterschiedliche Ausführungen nahezu beliebig miteinander kombiniert werden können. Nach dem Zusammenfügen von Abdeckung und Federbügel entstehen vielseitig einsetzbare Federelemente, die individuell an die jeweiligen Anforderungen des betreffenden Bremssattels angepasst werden können.

Als sinnvolle Ausführungsform der Federanordnung ist vorgesehen, dass das Federelement mittels wenigstens eines angeformten Vorsprungs unter Vorspannung axial am Bremssattel anliegt. Ein solcher Vorsprung ist bevorzugt mittels Durchstellung am Mittelabschnitt bzw. an der Abdeckung angeformt. Die axiale Anlage des Federelementes über wenigstens einen derartigen Vorsprung am Bremssattel eine reduzierte Auswirkung von Schwingungen und Vibrationen des Bremssattels. Dies wirkt sich vorteilhaft bei der Vermeidung unerwünschter Bremsgeräusche aus.

Schließlich erweist es sich als vorteilhaft, das Federelement aus Federblech zu fertigen, da aus der heute üblichen Blechbearbeitung eine einfache Herstellung des Blechfederelementes resultiert. Ferner lassen sich durch eine Blechfefeder stärkere Spannkräfte aufbringen als durch eine Drahtfeder.

Weiterhin ist zu Lösung der Aufgabe ein Bremsbelag nach den Merkmalen des Anspruchs 9 zwingend von Nöten. Dieser Bremsbelag umfasst ein Halteelement und ist für die Verwendung in einer Schwimmsattelscheibenbremse vorgesehen, welche einen verschiebbar an einem fahrzeugfest montierten Bremshalter gelagerten rahmenartigen Bremssattel mit einem inneren Bremssattelschenkel, einem äußeren Bremssattelschenkel und einem Brückenabschnitt umfasst. Mittels des Halteelements ist der Bremsbelag an dem äußeren Bremssattelschenkel anordenbar. Der Bremsbelag grenzt sich gegenüber dem Stand der Technik dadurch ab, dass das Halteelement mindestens einen Haltearm aufweist, welcher eine Ausnehmung des äußeren Bremssattelschenkels durchragt und an einem dem Belag abgewandten Endabschnitt eine Öffnung aufweist, die mittels einer Federlasche durchgreifbar ist, um den Belag am Bremssattelschenkel axial zu fixieren.

In einer Ausgestaltung der Erfindung weist das Halteelement mindestens zwei Klemmarme auf, welche in die Ausnehmung eingreifen, und zur Ausbildung einer Klemmverbindung mit dem Bremssattel dienen. Auf diese Weise werden die Federanordnung und der Bremsbelag am äußeren Gehäuseschenkel festgelegt, insbesondere in radialer Richtung.

Weitere Erfindungsmerkmale werden anhand zweier Ausführungsbeispiele in den Figuren dargestellt und im folgenden näher beschrieben.

Es zeigt/zeigen:
- Fig. 1: eine räumliche Ansicht Schwimmsattelscheibenbremse mit einer erfindungsgemäßen Federanordnung;
- Fig. 2: eine Vorderansicht der Schwimmsattelscheibenbremse mit Federanordnung nach Fig. 1;
- Fig. 3: eine Teilansicht in geschnittener Darstellung des axial äußeren Bereiches der Schwimmsattelscheibenbremse mit Federanordnung nach Fig. 1.
- Fig. 4 - 5: zwei Ansichten einer Schwimmsattelscheibenbremse mit einer zweiten Variante der Federanordnung;
- Fig. 6 - 7: zwei Ansichten eines mehrteiligen Federelementes der Federanordnung aus den Figuren 4, 5;
- Fig. 8: eine Ansicht eines axial außenliegenden Bremsbelages der Schwimmsattelscheibenbremse aus Figur 4 mit einem Halteelement;
- Fig. 9: eine räumliche Ansicht einer Schwimmsattelscheibenbremse mit einer halbseitig geschnitten dargestellten dritten Variante der Federanordnung.

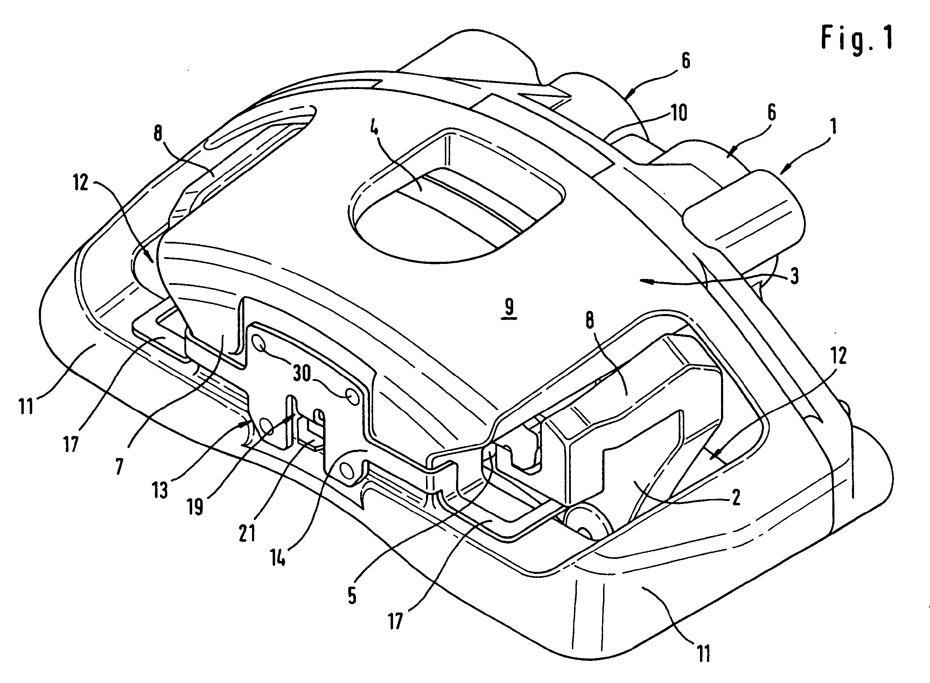

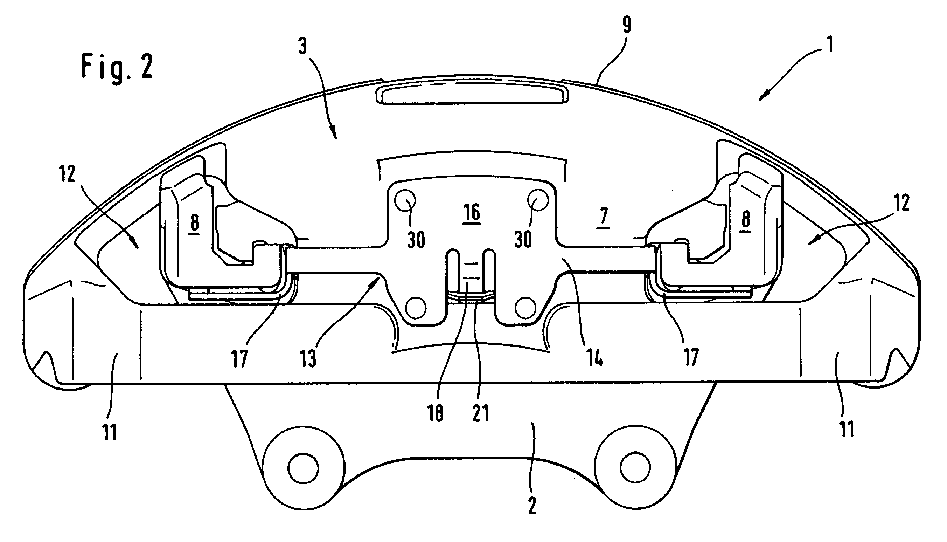

Die in den Figuren 1-5, 9 dargestellte Schwimmsattelscheibenbremse 1 umfasst einen fahrzeugfest montierten Bremshalter 2, an dem üblicherweise mittels zweier Bolzenführungen ein rahmenförmiger Bremssattel 3 bezogen auf eine zugehörige Bremsscheibe axial verschiebbar gelagert ist. Der rahmenförmige Bremssattel 3 übergreift radial den Rand einer nicht gezeigten Bremsscheibe und nimmt zwei aus Reibbelag und Rükkenplatte bestehende Bremsbeläge 4, 5 auf, die beiderseits der Bremsscheibe angeordnet sind. Dabei ist während einer Bremsbetätigung der axial innenliegende Bremsbelag 4 direkt über zumindest eine Betätigungsvorrichtung 6 und der äußere indirekt über den äußeren Bremssattelschenkel 7 des rahmenförmigen Bremssattels 3 an die Bremsscheibe 4 andrückbar. Die Bremsbeläge 4, 5 ihrerseits sind in Tragarmen 8 des Bremshalters 2, die die Bremsscheibe axial übergreifen, axial verschiebbar abgestützt und geführt.

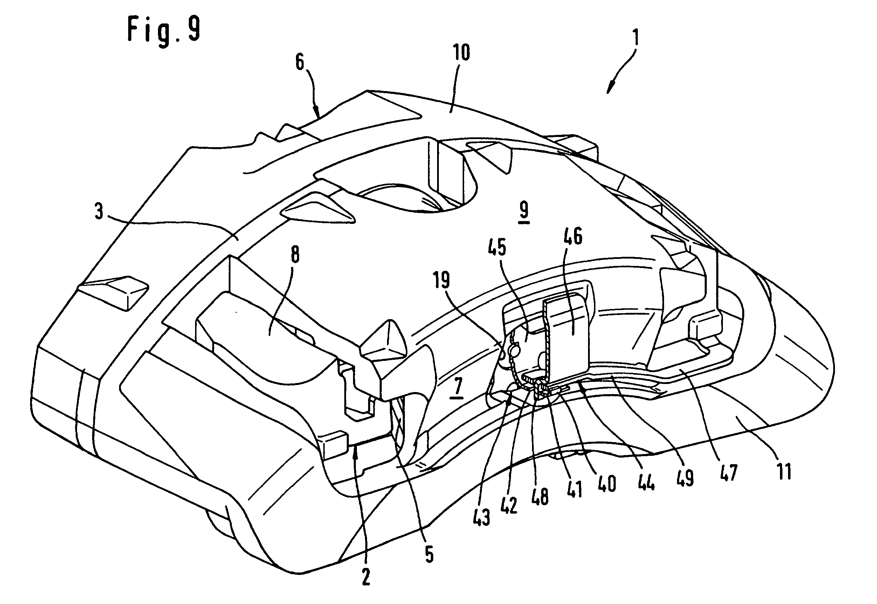

Der den Figuren zu entnehmende auch als Faustrahmensattel bezeichnete rahmenförmige Bremssattel 3 wird insbesondere bei schweren und/oder hoch motorisierten Fahrzeugen eingesetzt, da er eine gesteigerte Leistungsfähigkeit aufweist. Der rahmenförmige Bremssattel 3 zeichnet sich durch eine Erhöhung seiner Stabilität und Verwindungssteifigkeit aus. Der Bremssattel 3 umfasst zunächst einen axial die Bremsscheibe sowie die Bremsbeläge 4, 5 übergreifenden Brückenabschnitt 9 der auf beiden Seiten der Bremsscheibe in Bremssattelschenkel 7, 10 übergeht. In den axial inneren Bremssattelschenkel 10 ist zumindest eine Betätigungsvorrichtung 6 zur direkten Bremskraftbeaufschlagung des inneren Bremsbelages 4 integriert. Im Falle des Bremssattels 3 aus den Figuren 1-3 sind sogar zwei Betätigungsvorrichtungen 6 vorgesehen. Alternativ dazu zeigt Figur 9 eine Ausführung des Bremssattels 3 mit nur einer Betätigungsvorrichtung. Dabei handelt es sich in den Figuren um jeweils hydraulische Betätigungsvorrichtungen 6. Für die Umsetzung der erfindungsgemäßen Idee ist allerdings die genaue Ausführung der Betätigungsvorrichtung 6 unerheblich.

In Figur 1 bzw. 9 ist erkennbar, dass der Bremssattel 3 zweiteilig ausgeführt ist. Der innere Bremssattelschenkel 10 ist mit dem die Bremsscheibe übergreifenden Brückenabschnitt 9 üblicherweise lösbar verbunden, beispielsweise mittels Verschrauben. Durch die mehrteilige Anordnung des Bremssattels 3 kann dessen mechanische Bearbeitung vereinfacht werden. Weiterhin können für die verschiedenen Bremssattelbauteile unterschiedliche Werkstoffe verwendet werden, beispielsweise um Gewichtsreduzierungen zu erzielen. Im Sinne der Erfindung ist es jedoch ebenfalls möglich den Bremssattel 3 einteilig auszuführen.

Darüber hinaus weist der Bremssattel 3 einen Rahmen 11 auf, der den Bremshalter 2 bzw. seine Halterarme 8 in Umfangsrichtung der Bremsscheibe außen umgreift. Damit verbindet der Rahmen 11 den inneren Bremssattelschenkel 10 mit dem außenliegenden Bremssattelschenkel 7, indem er auf der axialen Außenseite in den außenliegenden Bremssattelschenkel 7 übergeht. Insgesamt wird durch den Rahmen 11 die Stabilität sowie Verwindungssteifigkeit des Bremssattels 3 erheblich gesteigert. Der rahmenförmige Bremssattel 3 ist so gestaltet, dass sich zwischen dem Brückenabschnitt 9 und dem Rahmen 11 auf beiden Seiten jeweils Fenster 12 ergeben, in die die Halterarme 8 hineinragen. Dies gestattet eine äußerst kompakte Gesamtbauweise der Schwimmsattelscheibenbremse 1.

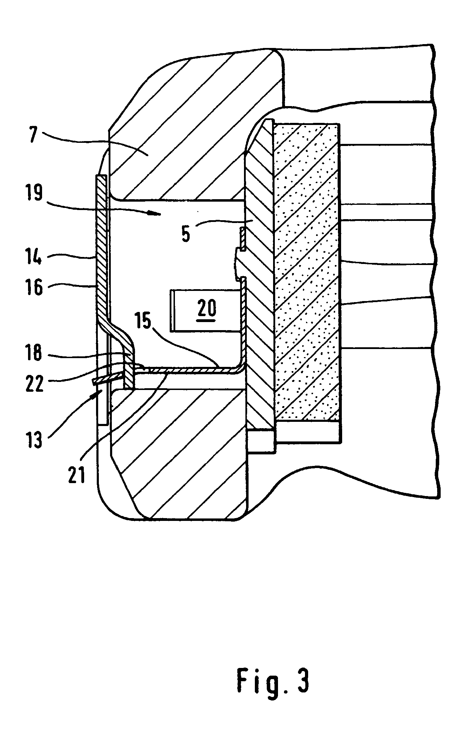

Ferner weist die Schwimmsattelscheibenbremse 1 eine mehrteilige Federanordnung 13 auf, die mehrere Funktionen erfüllt. Die Federanordnung 13 umfasst ein Federelement 14 sowie ein am äußeren Bremsbelag 5 befestigtes Halteelement 15. Das in der ersten Ausführung einteilige Federelement 14 ist vorzugsweise aus einem Blech- bzw. Federblechzuschnitt gefertigt und kann somit durch einfache Blechumformung in die gewünschte Form gebracht werden. Es weist einen großflächigen Mittelabschnitt 16 und seitlich, tangential sich erstreckende Federarme 17 auf. Ausgehend vom Mittelabschnitt 16 verlaufen die Federarme 17 in unmittelbarer Nähe entlang des äußeren Bremssattelschenkels 7 bzw. des Rahmens 11 und beanspruchen dadurch nur einen geringen Bauraum. Dazu sind die Federarme 17 mehrfach abgewinkelt. Mit ihrem Endabschnitt liegen die Federarme 17 jeweils unter Federvorspannung axial verschiebbar an der Unterseite der Halterarme 8 an. Zur Abstützung der entsprechenden Reaktionskraft liegt das Federelement 14 mit einer Federlasche 18 oder zumindest einem anderen geeigneten Abschnitt des Federelementes 14 unter Federvorspannung am Bremssattel 3 bzw. am Rahmen 11 an. Durch die Wirkung des Federelementes 14 werden also der fahrzeugfeste Bremshalter 2 und der Bremssattel 3 radial klapperfrei verspannt. Im einzelnen erfolgt diese radiale Verspannung unter Zwischenschaltung des äußeren Bremsbelages 5, der einerseits auf den Halterarmen 8 radial aufliegt und auf dem sich andererseits der Bremssattel 3 gemäß Figur 3 radial abstützt.

Der großflächige Mittelabschnitt 16 des Federelementes 14 dient der Abdeckung einer Ausnehmung 19 im Bremssattel 3 bzw. äußeren Bremssattelschenkel 7. Diese Ausnehmung dient beispielsweise der Erleichterung der Bremssattelbearbeitung, der Fixierung des äußeren Bremsbelages 5, der verbesserten Bremssattelkühlung oder einfach der Gewichtseinsparung am Bremssattel 3. Um das Eindringen von Schmutz, insbesondere in den Zwischenraum zwischen Bremsbelag 4, 5 und Bremsscheibe zu verhindern ist es sinnvoll, diese Ausnehmung 19 unmittelbar durch die ohnehin erforderliche Federanordnung 13 zu verschließen. Ferner wird durch den großflächigen Mittelabschnitt 16 ein positiver ästhetischer Effekt erreicht, wobei sich Möglichkeit bietet, auf dem Mittelabschnitt 16 außerdem eine Kennzeichnung beispielsweise in Form eines Schriftzuges oder sonstigen Firmenlogos einfach anzubringen.

Zur axialen Sicherung des außenliegenden Bremsbelages 5 ist an seiner der Bremsscheibe abgewandten Rückseite ein Halteelement 15 befestigt. Dabei kann das Halteelement 15 ebenfalls vorteilhaft einfach aus einem Blechzuschnitt gefertigt sein. Die verdrehsichere Befestigung am Bremsbelag 5 erfolgt beispielsweise mittels Kleben, Nieten oder eines vergleichbaren Befestigungsverfahrens. Das Halteelement 15 verfügt vorzugsweise über mehrere Klemmarme 20, zur Ausbildung einer reib- bzw. formschlüssigen Klemmverbindung mit dem Bremssattel 3, insbesondere innerhalb der Ausnehmung 19. Dabei liegen die Klemmarme 20 unter Federvorspannung beispielsweise in der Ausnehmung 19 reib- oder formschlüssig an. Dadurch wird vor allem die Handhabung des Bremssattels 3 mit Bremsbelägen 4, 5 während der Montage erleichtert. Außerdem besitzt das Halteelement 15 einen Haltearm 21, der zur axialen Halterung des Bremsbelages 5 am äußeren Bremssattelschenkel 7 mit dem Federelement 14 zusammenwirkt. Dazu erstreckt sich eine Federlasche 18 des Federelementes 14 unter axialer Federvorspannung in eine Öffnung 22 des Haltearmes 21. Über das Halteelement 21 wird damit der äußere Bremsbelag 5 stets in Anlage mit dem der Bremsscheibe zugewandten Teil des äußeren Bremssattelschenkels 7 gehalten. Eine unerwünschte Schiefstellung des äußeren Bremsbelages 5 während des Bremsenbetriebes wird zuverlässig verhindert. Dabei kann die Größe der auf den Bremsbelag 5 einwirkenden Vorspannkraft durch die Gestaltung insbesondere der Federlasche 18 bzw. des Haltearmes 21 beeinflusst werden. Insbesondere kann die Federlasche 18 bzw. vor allem der Haltearm 21 geschwungen oder faltenförmig ausgeführt sein, um die gewünschte Federrate zu erreichen. Alternativ ist es denkbar die Federlasche 18 bzw. den Haltearm 21 vorzugsweise entlang der jeweiligen Längserstreckung geschlitzt auszubilden, um für das betreffende Bauteil eine kleinere Federkonstante zu erhalten. Zur Montagevereinfachung ist es sinnvoll den Haltearm 21 mit einem in Richtung der zugehörigen Bremsscheibenachse abgewinkelten oder abgerundeten Endabschnitt zu versehen. Dadurch wird die Montage des Federelementes 14 erleichtert, indem die Federlasche 18 durch Entlanggleiten am Haltearm 21 unkompliziert in die Öffnung 22 eingefädelt werden kann. Mittels des abgewinkelten oder abgerundeten Endabschnittes wird ein Verhaken der Federlasche 18 am Haltearm 21 ausgeschlossen.

Eine zusätzliche axiale Verriegelung des Federelementes 14 am Bremssattel 3 kann beispielsweise durch nicht dargestellte Klammerabschnitte erfolgen, die an das Federelement 14 angeformt werden und die einen Abschnitt des Bremssattels 3 oder des Rahmens 11 axial hintergreifen. Analog dazu kann vorgesehen sein, dass sich die Federlasche 18 zur axialen Verriegelung des Federelementes 14 in eine Vertiefung am Bremssattel 3 oder Rahmen 11 erstreckt.

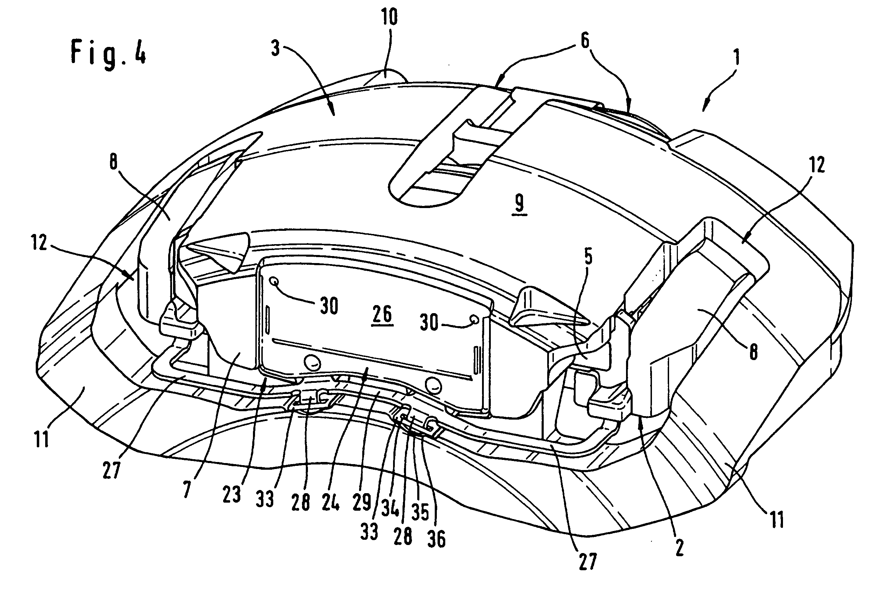

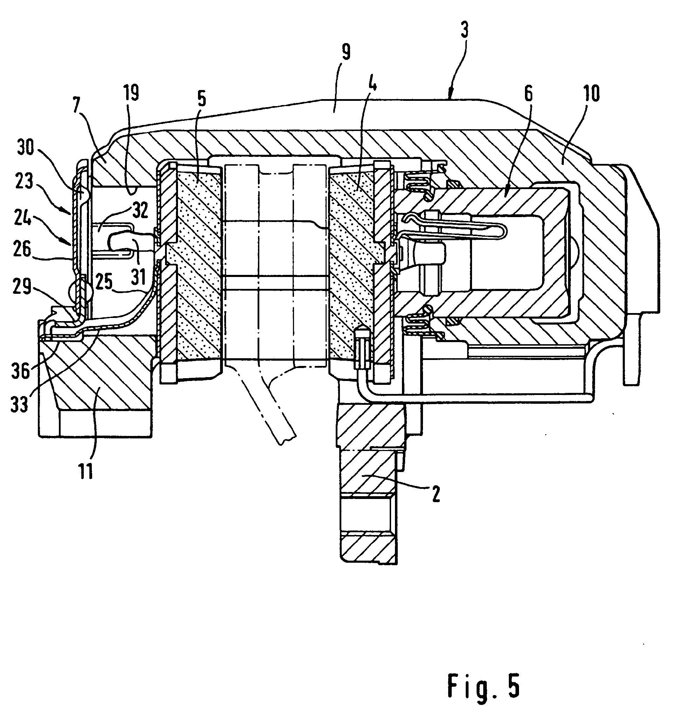

In den Figuren 4, 5 ist eine Schwimmsattelscheibenbremse mit einer weiterentwickelten Ausführung der mehrteiligen Federanordnung 23 dargestellt. Die grundlegenden Merkmale der Schwimmsattelscheibenbremse bzw. des rahmenförmigen Bremssattels 3 sind allerdings gegenüber der obigen Ausführung nach den Figuren 1-3 erhalten geblieben. Gemäß den Figuren 4, 5 weist hingegen die Federanordnung 23 neben dem mit dem axial außenliegenden Bremsbelag 5 verbundenen Halteelement 25 ein zunächst mehrteiliges Federelement 24 auf. Das Federelement 24 umfasst einen Federbügel 29 sowie eine zentral daran befestigte Abdeckung 26. Die Abdeckung 26 entspricht dabei in der Funktion dem großflächigen Mittelabschnitt 16 aus den Figuren 1-3 und dient dem Verschluss von Ausnehmungen 19 im Bremssattel 3. Dabei liegt die Abdeckung 26 zur Minimierung der negativen Auswirkungen von Schwingungen und Vibrationen des Bremssattels 3 vorzugsweise nur punktuell sowie unter Vorspannung axial am Bremssattel 3 an. Dazu ist in den dargestellten Ausführungsbeispielen jeweils am Mittelabschnitt 16 bzw. an der Abdeckung 26 zumindest ein Vorsprung 30 angeformt, über den das Federelement 14, 24 am Bremssattel 3 anliegt. Vorzugsweise sind zwei Vorsprünge 30 mittels Blechdurchstellung angeformt. Die mehrteilige Ausführung des Federelementes 24 gestattet die separate Auslegung und Herstellung von Abdeckung 26 und Federbügel 29. Dies eröffnet die Möglichkeit unterschiedliche Abdeckungen 26 und Federbügel 29 individuell nach den jeweiligen Anforderungen des Bremssattels 3 nach dem Baukastenprinzip gezielt zusammen zu stellen. Dies erlaubt die Realisierung einer nahezu beliebigen Vielfalt unterschiedlicher Federanordnungen, die flexibel für die jeweilige Einzelanwendung eingesetzt werden können. Der vorzugsweise einteilige Federbügel 29 geht wie bereits oben gezeigt seitlich in Federarme 27 über, die ihrerseits unter radialer Vorspannung an der Unterseite der Halterarme 8 verschiebbar anliegen.

Zur axialen Befestigung einerseits des axial äußeren Bremsbelages 5 und andererseits des Federelementes 24 ist am Bremsbelag 5 zumindest ein Halteelement 25 befestigt. In den Figuren 4, 5, 8 sind zur Verstärkung der Befestigungswirkung zwei Halteelemente 25 gezeigt. Jedes Halteelement 25 ist, insbesondere durch Vernieten, verdrehsicher mit dem Bremsbelag 5 verbunden. Mittels Klemmarmen 31 ist das Halteelement 25 und damit der Bremsbelag 5 kraftschlüssig in der Ausnehmung 19 des Bremssattels 3 bzw. Bremssattelschenkels 7 lösbar verbunden. Zur Verbesserung der axialen Befestigung des Halteelementes 25 sind in die Ausnehmung 19 Taschen 32 eingeformt, in die die Klemmarme 31 eingreifen können. Ferner besitzt jedes Halteelement 25 einen zusätzlichen Haltearm 33, der der axialen Verriegelung des Federelementes 24 dient. Dazu ist am Haltearm 33 jeweils eine Öffnung 34 angeformt, in die das Federelement 24 bzw. der Federbügel 29 mit einer Federlasche 28 eingehakt werden kann. Vorzugsweise wird dabei die Öffnung 34 durch einen durchgestellten Abschnitt 35 des Haltearmes 33 gebildet. Dieser durchgestellte Abschnitt 35 dient als Anschlag für die eingehakte Federlasche 28. Damit stützt sich die Federlasche 28 über den durchgestellten Abschnitt 35 axial am Bremssattel 3 ab. Der durchgestellte Abschnitt 35 bildet damit eine Zwischenlage zwischen Federlasche 28 und Bremssattel 3. Zur gleichzeitigen Zentrierung des Federelementes 24 mit Abdeckung 26 und Federbügel 29 ist es sinnvoll den durchgestellten Abschnitt 35 bogenförmig auszubilden. Weiterhin erweist es sich als günstig den Haltearm 33 mit dem durchgestellten Abschnitt 35 innerhalb einer Vertiefung 36 des Bremssattels 3 anzuordnen, wobei die Vertiefung 36 eine dem bogenförmigen, durchgestellten Abschnitt 35 angepasste Kontur aufweist.

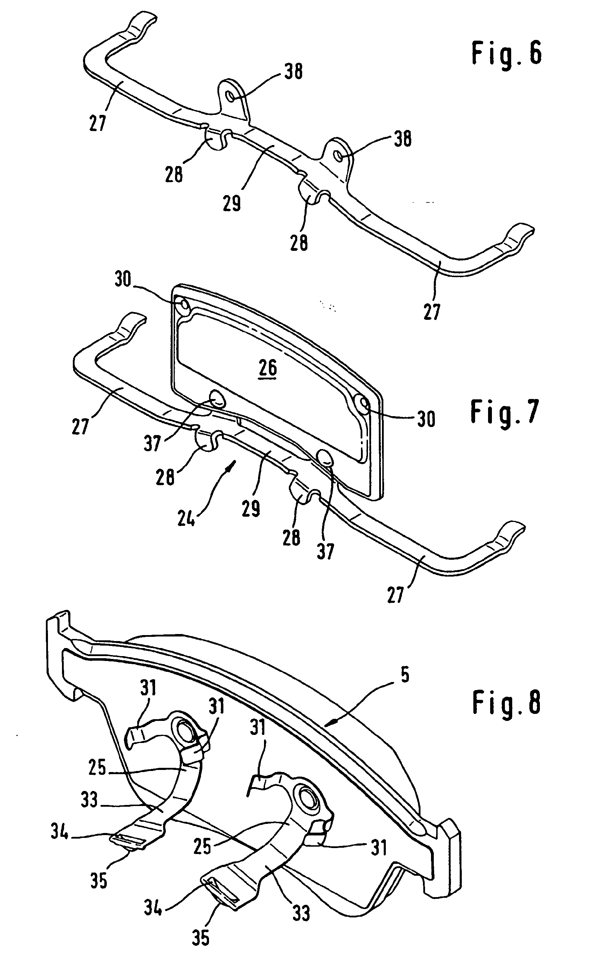

Die Figuren 6, 7 zeigen detailliert den mehrteiligen Aufbau des Federelementes 24. Es umfasst einerseits den einteiligen Federbügel 29 mit seitlichen Federarmen 27 sowie die Abdekkung 26. Dabei ist die Abdeckung 26 vorzugsweise über zwei Nieten 37 an zugehörigen Befestigungslöchern 38 des Federbügels 29 befestigt. Analog sind auch andere Befestigungsmethoden möglich. Verschiedene Abdeckungen 26 und Federbügel 29 lassen sich damit anwendungsbezogen äußerst flexibel miteinander kombinieren.

Figur 8 zeigt einen axial außenliegenden Bremsbelag 5 mit verdrehsicher daran befestigten Halteelementen 25. Die Anzahl der verwendeten Halteelemente 25 hängt dabei im wesentlichen von der Anzahl der entsprechenden Ausnehmungen 19 im außenliegenden Bremssattelschenkel 7 ab. Die Halteelemente 25 weisen zumindest zwei Klemmarme 31 und einen Haltearm 33 auf und sind bevorzugt mittels Vernietung am Bremsbelag 5 verdrehsicher befestigt. Die Haltearme 33 dienen in oben beschriebener Weise der axialen Fixierung des Federelementes 24.

Die in Figur 9 abgebildete alternative Ausführung der Federanordnung 43 eignet sich besonders für Schwimmsattelscheibenbremsen 1 mit nur einer Betätigungsvorrichtung 6. Die Federanordnung 43 umfasst ein mehrteiliges Federelement 44 sowie ein am axial äußeren Bremsbelag 5 befestigtes Halteelement 45. Das Federelement 44 besitzt wie bei den bereits beschriebenen Varianten einen Federbügel 49 mit seitlichen Federarmen 47, wobei am Federbügel 49 eine zentrale Abdeckung 46 befestigt ist. Das Federelement 44 ist seinerseits mittels einer angeformten Federlasche 48 am Haltearm 41 des Halteelementes 45 axial verrastet. Dazu erstreckt sich die Federlasche 48 im montierten Zustand in eine zugehörige Öffnung 42 im Haltearm 41. Im Unterschied zu den obigen Ausführungen ist die Federlasche 48 nach Figur 9 einstückig an die Abdeckung 46 angeformt. Dies erlaubt eine besonders kompakte Bauweise. Darüber hinaus ist am Haltearm 41 ein abgewinkelter Endabschnitt 40 ausgebildet. Dieser abgewinkelte Endabschnitt 40 ermöglicht eine vereinfachte Montierbarkeit der Federanordnung 43. Bei der Montage der Federanordnung 43 sind im Bremssattel 3 bereits die Bremsbeläge 4, 5 fixiert. Insbesondere ist der außenliegende Bremsbelag 5 mit dem Halteelement 45 in der Ausnehmung 19 des Schwimmsattelschenkels 7 befestigt. Zur Montage des Federelementes 44 wird der eine Federarm 47 des Federbügels 49 am Halterarm 8 angelegt und zunächst mit der Federlasche 48 am Haltearm 41, axial innenliegend zum abgewinkelten Endabschnitt 40, abgestützt. Durch Verschwenken des Federbügels 49 wird auch der zweite Federarm 47 am zugehörigen Halterarm 8 radial verspannt. Abschließend wird der Federbügel 49 axial verrastet, indem durch axialen Druck die Federlasche 48 in die Öffnung 42 des Haltearmes 41 einschnappt. Dabei gestattet der abgewinkelte Endabschnitt 40 eine vorteilhafte Vormontageposition des Federelementes 44 mit Federlasche 48 am Halterarm 41.

Grundsätzlich lassen sich die Einzelteile der Federanordnung 13, 23, d. h. das Federelement 14 bzw. der Federbügel 29, die Abdeckung 26 sowie das Halteelement 15, 25, vorteilhaft aus Blech herstellen. Dies erlaubt eine kostengünstige und vielseitige Herstellung der Einzelteile.

Ferner ist die Anwendung erfindungsgemäßer Federanordnungen 13, 23 nicht auf Bremssättel mit zwei Betätigungsvorrichtungen 6 beschränkt. Derartige Federanordnungen 13, 23 können gleichsam auch bei Bremssätteln 3 mit nur einer Betätigungsvorrichtung oder aber mehreren Betätigungsvorrichtung zum Einsatz kommen.

## Patentansprüche

1. Schwimmsattelscheibenbremse (1) mit einem verschiebbar an einem fahrzeugfest montierten Bremshalter (2) gelagerten rahmenartigen Bremssattel (3), wobei der Bremssattel (3) einen inneren Bremssattelschenkel (10), einen äußeren Bremssattelschenkel (7) und einen Brückenabschnitt (9) umfasst, und damit eine Bremsscheibe sowie beiderseits der Bremsscheibe angeordnete Bremsbeläge (4, 5) umgreift, wobei die Bremsbeläge (4, 5) am Bremshalter (2, 8) verschiebbar geführt und abgestützt sind, und wobei an einem äußeren Bremsbelag (5) ein Halteelement (15, 25, 45) befestigt ist, mit einer mehrteiligen Federanordnung (13, 23, 43), die sowohl den Bremssattel (3) radial gegen den Bremshalter (2) als auch den axial äußeren Bremsbelag (5) axial gegen den rahmenartigen Bremssattel (3) verspannt, wobei die Federanordnung (13, 23, 43) ein Federelement (14, 24, 44) umfasst, das sich mit seitlichen Federarmen (17, 27, 47) jeweils am Bremshalter (2, 8) radial abstützt sowie andererseits mit wenigstens einem Abschnitt radial am Bremssattel (3) abgestützt ist, **dadurch gekennzeichnet, dass** das Halteelement (15, 25, 45) mindestens einen Haltearm (21, 33, 41) aufweist, welcher eine Ausnehmung (19) des Bremssattelschenkels (7) im wesentlichen durchragt und an einem dem Bremsbelag (5) abgewandten Endabschnitt (40) eine Öffnung (22,34,42) aufweist, in welche das Federelement (14, 24, 44) mit einer Federlasche (18,28,48) eingreift, und auf diese Weise unter Vorspannung axial mit dem Bremsbelag (5) verbunden ist.

2. Schwimmsattelscheibenbremse nach Anspruch 1, **dadurch gekennzeichnet, dass** das Halteelement (15, 25, 45) mindestens zwei Klemmarme (20,31) aufweist, welche in die Ausnehmung (19) eingreifen und zur Ausbildung einer Klemmverbindung mit dem Bremssattel (3) dienen.

3. Schwimmsattelscheibenbremse nach einem oder mehreren der vorhergehenden Ansprüche, **dadurch gekennzeichnet, dass** das Federelement (14, 24, 44) mit der Federlasche (18, 28, 48) radial am Bremssattel (3) abgestützt ist.

4. Schwimmsattelscheibenbremse nach einem oder mehreren der vorhergehenden Ansprüche, **dadurch gekennzeichnet, dass** die Federlasche (18, 28, 48) zur axialen Verriegelung des Federelementes (14, 24, 44) am Bremssattel (3) in eine Vertiefung (36) des Bremssattels (3) eingreift.

5. Schwimmsattelscheibenbremse nach einem oder mehreren der vorhergehenden Ansprüche, **dadurch gekennzeichnet, dass** das Federelement (14, 24) einen Mittelabschnitt (16, 26) umfasst, der eine zugehörige Ausnehmung (19) im rahmenartigen Bremssattel (3) im wesentlichen vollständig abdeckt.

6. Schwimmsattelscheibenbremse nach einem oder mehreren der vorhergehenden Ansprüche, **dadurch gekennzeichnet, dass** das mehrteilige Federelement (24) einen als Abdeckung (26) ausgebildeten Mittelabschnitt und einen Federbügel (29) mit Federarmen (27) aufweist, wobei Abdeckung (26) und Federbügel (29) miteinander verbunden sind.

7. Schwimmsattelscheibenbremse nach einem der vorhergehenden Ansprüche, **dadurch gekennzeichnet, dass** das Federelement (14, 24) mittels wenigstens eines angeformten Vorsprungs (30) unter Vorspannung axial am Bremssattel (3) anliegt.

8. Schwimmsattelscheibenbremse nach einem der vorhergehenden Ansprüche, **dadurch gekennzeichnet, dass** das Federelement (14, 24, 26, 29) aus Blech gefertigt ist.

9. Bremsbelag für eine Schwimmsattelscheibenbremse, welche einen verschiebbar an einem fahrzeugfest montierten Bremshalter (2) gelagerten rahmenartigen Bremssattel (3) mit einem inneren Bremssattelschenkel (10), einem äußeren Bremssattelschenkel (7) und einem Brückenabschnitt (9) umfasst, wobei der Bremsbelag (5) an dem äußeren Bremssattelschenkel (7) anordenbar ist, wofür ein Halteelement (15, 25, 45) am Bremsbelag (5) vorgesehen ist, **dadurch gekennzeichnet, dass** das Halteelement (15, 25, 45) mindestens einen Haltearm (21, 33, 41) aufweist, welcher eine Ausnehmung (19) des Bremssattelschenkels (7) im wesentlichen durchragt und an einem dem Belag (5) abgewandten Endabschnitt eine Öffnung (22, 34, 42) aufweist, die mittels einer Federlasche (18, 28, 48) durchgreifbar ist, um den Belag (5) am Bremssattelschenkel (7) axial zu fixieren.

10. Bremsbelag Anspruch 9, **dadurch gekennzeichnet, dass** das Halteelement (15, 25, 45) mindestens zwei Klemmarme (20,31) aufweist, welche in die Ausnehmung (19) eingreifen, und zur Ausbildung einer Klemmverbindung mit dem Bremssattel (3) dienen.

## Claims

1. Floating-caliper disc brake (1) including a frame-type brake caliper (3) that is displaceably supported on a brake holder (2) firmly attached to the vehicle, with the brake caliper (3) comprising an inward brake caliper leg (10), an outward brake caliper leg (7) and a bridge portion (9), thus straddling a brake disc and brake pads (4, 5) arranged on either side of the brake disc, with the brake pads (4, 5) being displaceably guided and supported at the brake holder (2, 8), and with a holding element (15, 25, 45) being attached at an outward brake pad (5), including a multi-part spring assembly (13, 23, 43) which clamps the brake caliper (3) radially against the brake holder (2) and clamps the axially outward brake pad (5) axially against the frame-type brake caliper (3), the said spring assembly (13, 23, 43) comprising a spring element (14, 24, 44) which is radially supported with lateral spring arms (17, 27, 47) on the brake holder (2, 8) and is radially supported with at least one portion on the brake caliper (3), on the other hand,
**characterized in that** the holding element (15, 25, 45) includes at least one holding arm (21, 33, 41), which essentially projects through a recess (19) of the brake caliper leg (7) and, at an end portion (40) remote from the brake pad (5), has an opening (22, 34, 42) into which the spring element (14, 24, 44) with a spring shackle (18, 28, 48) is engaging, and is axially connected under bias to the brake pad (5) in this way.

2. Floating-caliper disc brake as claimed in claim 1,
**characterized in that** the holding element (15, 25, 45) has at least two clamping arms (20, 31), which engage the recess (19) and are used to provide a clamping engagement with the brake caliper (3).

3. Floating-caliper disc brake as claimed in any one or more of the preceding claims,
**characterized in that** the spring element (14, 24, 44) with the spring shackle (18, 28, 48) is radially supported on the brake caliper (3).

4. Floating-caliper disc brake as claimed in any one or more of the preceding claims,
**characterized in that** the spring shackle (18, 28, 48) engages an indentation (36) of the brake caliper (3) for axially locking the spring element (14, 24, 44) at the brake caliper (3).

5. Floating-caliper disc brake as claimed in any one or more of the preceding claims,
**characterized in that** the spring element (14, 24) comprises a mid-portion (16, 26), which covers an associated recess (19) in the frame-type brake caliper (3) to a substantially full extent.

6. Floating-caliper disc brake as claimed in any one or more of the preceding claims,
**characterized in that** the multi-part spring element (24) includes a mid-portion designed as a cover (26) and a spring clip (29) with spring arms (27), and cover (26) and spring clip (29) are interconnected.

7. Floating-caliper disc brake as claimed in any one of the preceding claims,
**characterized in tha**t the spring element (14, 24) bears under bias axially against the brake caliper (3) by means of at least one projection (30).

8. Floating-caliper disc brake as claimed in any one of the preceding claims,
**characterized in that** the spring element (14, 24, 26, 29) is made of sheet metal.

9. Brake pad for a floating-caliper disc brake including a frame-type brake caliper (3) that is displaceably supported on a brake holder (2) firmly attached to the vehicle and comprises an inward brake caliper leg (10), an outward brake caliper leg (7) and a bridge portion (9), wherein the brake pad (5) is adapted to be arranged on the outward brake caliper leg (7), to what end a holding element (15, 25, 45) is provided at the brake pad (5),
**characterized in that** the holding element (15, 25, 45) includes at least one holding arm (21, 33, 41), which essentially projects through a recess (19) of the brake caliper leg (7) and, at an end portion remote from the brake pad (5), has an opening (22, 34, 42) through which a spring shackle (18, 28, 48) can extend in order to fix the pad (5) axially in position on the brake caliper leg (7).

10. Brake pad as claimed in claim 9,
**characterized in that** the holding element (15, 25, 45) has at least two clamping arms (20, 31), which engage the recess (19) and are used to provide a clamping engagement with the brake caliper (3).

## Revendications

1. Frein à disque à étrier flottant (1) avec un étrier de frein (3) de type cadre monté coulissant sur un porte-frein (2) solidaire du véhicule,dans lequel l'étrier de frein (3) comprend une branche d'étrier de frein intérieure, une branche d'étrier de frein extérieure (7) et un pontet (9), et entoure ainsi un disque de frein ainsi que des garnitures de frein (4,5) disposées des deux côtés du disque de frein, dans lequel les garnitures de frein (4, 5) sont guidées et soutenues coulissantes sur le porte-frein (2, 8), et dans lequel sur une garniture de frein extérieure (5) est fixé un élément de retenue (15, 25, 45) avec un agencement de ressort (13, 23, 43) en plusieurs parties qui tend l'étrier de frein (5) radialement contre le porte-frein (2) de même que la garniture de frein axialement extérieure (5) axialement contre l'étrier de frein (3) de type cadre, dans lequel l'agencement de ressort (13, 23, 43) comprend un élément de ressort (14, 24, 44) qui prend appui radialement par des bras de ressort latéraux (17, 27, 47) respectifs contre le porte-frein (2, 8) et est soutenu d'autre part radialement contre l'étrier de frein (3) par au moins un segment, **caractérisé en ce que** l'élément de retenue (15, 25, 45) comporte au moins un bras de retenue (21, 33, 41) qui traverse sensiblement un évidement (19) de la branche d'étrier de frein (7) et présente, sur un segment terminal (40) tourné à l'opposé de la garniture de frein (5), une ouverture (22, 34, 42) dans laquelle l'élément de ressort (14, 24, 44) s'engage par une patte élastique (18, 28, 48), et est relié de cette façon axialement avec précontrainte à la garniture de frein (5).

2. Frein à disque à étrier flottant selon la revendication 1, **caractérisé en ce que** l'élément de retenue (15, 25, 45) comporte au moins deux bras de serrage (20, 31) qui s'engagent dans l'évidement (19) et qui servent à réaliser une liaison par serrage avec l'étrier de frein (3).

3. Frein à disque à étrier flottant selon une ou plusieurs des revendications précédentes, **caractérisé en ce que** l'élément de ressort (14, 24, 44) avec la patte élastique (18, 28, 48) est soutenu radialement contre l'étrier de frein (3).

4. Frein à disque à étrier flottant selon une ou plusieurs des revendications précédentes, **caractérisé en ce que** la patte élastique (18, 28, 48) s'engage dans un renfoncement (36) de l'étrier de frein (3) pour le verrouillage axial de l'élément de ressort (14, 24, 44) sur l'étrier de frein (3).

5. Frein à disque à étrier flottant selon une ou plusieurs des revendications précédentes, **caractérisé en ce que** l'élément de ressort (14, 24) comprend un segment central (16, 26) qui recouvre sensiblement totalement un évidement (19) correspondant de l'étrier de frein (3) de type cadre.

6. Frein à disque à étrier flottant selon une ou plusieurs des revendications précédentes, **caractérisé en ce que** l'élément de ressort (24) en plusieurs parties comporte un segment central réalisé sous la forme d'un capot (26) et un étrier élastique (29) avec des bras élastiques (27), le capot (26) et l'étrier élastique (29) étant reliés l'un à l'autre.

7. Frein à disque à étrier flottant selon l'une des revendications précédentes, **caractérisé en ce que** l'élément de ressort (14, 24) s'applique axialement avec précontrainte contre l'étrier de frein (3), au moyen d'au moins une saillie (30) formée dessus.

8. Frein à disque à étrier flottant selon l'une des revendications précédentes, **caractérisé en ce que** l'élément de ressort (14, 24, 26, 29) est fabriqué en tôle.

9. Garniture de frein pour un frein à disque à étrier flottant qui comprend un étrier de frein (3) de type cadre monté coulissant sur un porte-frein (2) solidaire du véhicule avec une branche d'étrier de frein intérieure (10), une branche d'étrier de frein extérieure (7) et un pontet (9), dans laquelle la garniture de frein (5) peut être disposée sur la branche d'étrier de frein extérieure (7), un élément de retenue (15, 25, 45) étant prévu à cet effet sur la garniture de frein (5), **caractérisée en ce que** l'élément de retenue (15, 25, 45) comporte au moins un bras de retenue (21, 33, 41) qui traverse sensiblement un évidement (19) de la branche d'étrier de frein (7) et présente, sur le segment terminal tourné à l'opposé de la garniture (5), une ouverture (22, 34, 42) qui peut être traversée au moyen d'une patte élastique (18, 28, 48) afin de fixer axialement la garniture (5) sur la branche d'étrier de frein (7).

10. Garniture de frein selon la revendication 9, **caractérisée en ce que** l'élément de retenue (15, 25, 45) comporte au moins deux bras de serrage (20, 31) qui s'engagent dans l'évidement (9) et qui servent à réaliser une liaison par serrage avec l'étrier de frein (3).
